(19) Europäisches Patentamt
European Patent Office
Office européen des brevets

(11) **EP 2 365 644 A1**

(12) **EUROPEAN PATENT APPLICATION**

(43) Date of publication:
**14.09.2011 Bulletin 2011/37**

(51) Int Cl.:
*H04B 3/32* (2006.01)    *H04B 3/46* (2006.01)

(21) Application number: **10305246.0**

(22) Date of filing: **12.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Alcatel Lucent**
**75008 Paris (FR)**

(72) Inventors:
• **Guenach, Mamoun**
**1830 Machelen (BE)**
• **Maes, Jochen**
**2431 Veerle (BE)**

• **Peeters, Michael**
**2547 Lint (BE)**
• **Li, Beier**
**3001 Leuven (BE)**
• **Tsiaflakis, Paschalis**
**3000 Leuven (BE)**
• **Moonen, Marc**
**3020 Herent (BE)**

(74) Representative: **D'Halleweyn, Nele Veerle Trees Gertrudis**
**Arnold & Siedsma**
**Sweelinckplein 1**
**2517 GK Den Haag (NL)**

(54) **Method and system for distributing crosstalk cancellation resources in a multi-user access network**

(57)    The invention provides a method and system, preferably an access node, for allocating an amount of crosstalk cancellation resources among a plurality of network links, wherein a set of resource allocation parameters is determined in function of a predetermined high-layer metric, wherein the set of resource allocation parameters comprises, for each one of the plurality of network links, an indication whether to cancel crosstalk received from individual other ones of the plurality of network links.

FIGURE 2

**Description**

**Field of Invention**

The present invention pertains to the field of crosstalk cancellation for multi-user access networks, and more particularly to efficiently allocating crosstalk cancellation resources to different digital subscriber lines.

**Background**

The concept of crosstalk cancellation, also known as vectoring, is known in the art and has been applied with success to digital subscriber line systems. A standard development project entitled "G.vector" is underway, specifying the necessary details to obtain interoperability between different network elements that apply crosstalk cancellation. The problem of efficiently allocating limited crosstalk cancelling resources among a plurality of digital subscriber lines has not been adequately addressed.

**Summary**

According to an aspect of the invention, there is provided a method for allocating an amount of crosstalk cancellation resources among a plurality of network links, said method comprising determining a set of resource allocation parameters in function of a predetermined high-layer metric, wherein said set of resource allocation parameters comprises, for each one of said plurality of network links, an indication whether to cancel crosstalk received from individual other ones of said plurality of network links.

The present invention is based on the insight that it is desirable to allocate a limited amount of processing power as efficiently as possible, in particular in view of achieving a particular system-wide characteristic. It is shown that removing the 30% most dominant crosstalk over the tones of one user, 80% to 90% of the theoretically achievable improvement in the data rate can be achieved, so it is advantageous to work with a limited, but well allocated crosstalk cancellation resource budget. Possible optimization goals include maximizing the total aggregate data rate of the system or maximizing the data rate of selected lines.

It is an advantage of the invention that crosstalk cancellation resources do not have to be statically allocated, but may be distributed according to varying desired or measured high-layer metrics. This is of particular significance when the total amount of available crosstalk cancellation resources is less than what would be required to cancel crosstalk between every potential disturber-receiver pair.

In an embodiment, the method of the present invention comprises determining respective values of a predetermined high-layer metric for one or more selected links of said plurality of network links; and determining the set of resource allocation parameters so as to optimize a predetermined function of said values of said predetermined high-layer metric for said selected links.

It is an advantage of this embodiment that limited resources may be allocated in optimal way. The allocation may be rendered "optimal" with respect to a chosen function of a high-layer metric, in particular a utility function.

In an embodiment of the method of the present invention, said predetermined metric is a data queue length.

It is an advantage of this embodiment that optimization of the resource allocation with respect to a data queue length may be used to affect the transmission delay experienced by the selected links. In a typical first-in-first-out (FIFO) buffer architecture, the queue length is proportional to the queuing delay for a given fixed data extraction rate. The data extraction rate is a function of the data rate of the transmission line fed by the queue. Hence, increasing the data rate of this line by a judicious allocation of crosstalk cancellation resources has a beneficial effect on the queuing delay.

In an embodiment of the method of the present invention, said utility function comprises a weighted sum of the respective data rates of said selected network links, each of said data rates being multiplied by the corresponding data queue length.

In an embodiment of the method of the present invention, said plurality of network links operate according to discrete multi-tone modulation, and said determining is performed on a per-tone basis. Under discrete multi-tone modulation, all types of multi-carrier modulation are understood, including in particular DMT as used in ADSL, VDSL, and VDSL2, and OFDM as used in wireless LAN.

In a particular embodiment, the method of the present invention further comprises the step of identifying tones for which said resource allocation parameters are substantially constant under varying values of said predetermined high-layer metric, wherein said determining said set of resource allocation parameters is limited to tones that are not so identified.

In an embodiment, the method of the present invention further comprises reducing said amount to a level below a physically available amount while preserving a predetermined performance level, and determining said set of resource allocation parameters under the constraint of respecting said reduced amount.

In an embodiment of the method of the present invention, said crosstalk cancellation resources comprise resources to compute a compensation term to be added to a downstream signal prior to transmission.

In an embodiment of the method of the present invention, said crosstalk cancellation resources comprise resources to compute a compensation term to be added to a received upstream signal.

In an embodiment of the method of the present invention, the network links are digital subscriber lines.

According to an aspect of the invention, there is provided a system for allocating an amount of crosstalk cancellation resources among a plurality of network links, said system comprising a crosstalk cancellation resource allocation engine operatively coupled to a crosstalk canceller, wherein said crosstalk cancellation resource allocation engine is adapted to determine a set of resource allocation parameters in function of a predetermined high-layer metric, and wherein said crosstalk canceller is adapted to calculate a signal component to substantially cancel crosstalk according to said crosstalk cancellation resource allocation values.

In an embodiment of the system of the present invention, said crosstalk cancellation resource allocation engine is adapted to obtain respective values of a predetermined metric for selected links of said plurality of network links and to determine a set of resource allocation parameters that optimizes a predetermined function of said values of said predetermined high-layer metrics for said selected links.

In an embodiment of the system of the present invention, said predetermined metric is a data queue length.

In an embodiment of the system of the present invention, said function comprises a weighted sum of the respective data rates of said selected links, each of said data rates being multiplied by the corresponding data queue length.

In an embodiment of the system of the present invention, said plurality of network links operate according to discrete multi-tone modulation, and said optimizing is performed on a per-tone basis.

In an embodiment of the system of the present invention, said crosstalk cancellation resources comprise resources to compute a compensation term to be added to a downstream signal prior to transmission.

In an embodiment of the system of the present invention, said crosstalk cancellation resources comprise resources to compute a compensation term to be added to a received upstream signal.

In an embodiment of the system of the present invention, the network links are digital subscriber lines.

### Brief Description of the Figures

Some embodiments of apparatus and/or methods in accordance with embodiments of the present invention are now described, by way of example only, and with reference to the accompanying drawings, in which:

Figure 1 is a flow chart of an embodiment of a method according to the present invention; and

Figure 2 is a schematic diagram of an embodiment of a system according to the present invention, operating on the downstream transmission; and

Figure 3 is a schematic diagram of an embodiment of a system according to the present invention, operating on the upstream transmission.

### Description of Embodiments

The data rate $b^n$ that may be achieved on an access network link such as a digital subscriber line with index $n$, either in the upstream or the downstream direction, is determined by the signal-to-noise ratio (SNR) of the channel in question according to the general equation

$$b^n = \int \log_2 \left( 1 + \frac{1}{\Gamma} \frac{\left| H^{n,n}(f) \right|^2 S^n(f)}{\sum_{m \neq n} \left| H^{n,m}(f) \right|^2 S^m(f) + \sigma^n(f)} \right) df$$

where $H^{i,j}(f)$ denotes the channel transfer function from transmitter $j$ to receiver $i$, $S^i(f)$ is the transmit PSD of transmitter $i$, and $i$ is the additive noise experienced by receiver $i$. is an 'SNR gap' which represents the efficiency of the modulation scheme, operating at a predetermined bit error rate.

Where the transmission channel is spectrally narrow, as is the case for an individual tone *k* of a digital subscriber line *n* operating according to discrete multi-tone (DMT) modulation, the frequency dependency of the different variables may be ignored.

As can be seen in the above equation, the denominator of the variable term in the argument of the logarithm, which represents the general noise in the channel, includes crosstalk caused by transmissions from other communication systems, notably from other digital subscriber line systems operating over copper pairs situated in the same or a nearby wire bundle.

A simplification of the above equations may be obtained if it is assumed that the tones are decoupled. This assumption is in fact substantially met, if the different DMT transmitters are symbol-synchronized, such that the orthogonality of the individual tones ensures that each transmitted tone causes crosstalk only in the corresponding tones of the other lines. This leads to the following equation

$$b_k^n = \log_2 \left( 1 + \frac{1}{\Gamma} \frac{\left| h_k^{n,n} \right|^2 s_k^n}{\sum_{m \neq n} \left| h_k^{n,m} \right|^2 s_l^m + \sigma_k^n} \right)$$

where lower case symbols have been used to denote the frequency-independent counterparts of the variables introduced above, and lower indices have been added to designate the tone or tones to which a variable pertains. As a general example to clarify this notation, $h_k^{n,m}$ is the channel transfer function on tone *k* from transmitter m to receiver *n*.

In the upstream (respectively downstream), knowing the received signals (respectively the transmitted QAM symbols) over the different lines that interact at the crosstalk level, and assuming perfect knowledge of the crosstalk channel matrix, the various crosstalk contributions can be calculated accurately, and such calculations may be relied on to remove crosstalk from the desired signal. Using the Boolean variable $c_k^{n,m}$ to indicate whether crosstalk from line *m* to line *n* at tone *k* is being cancelled (value 1) or not (value 0), the rate equation for each tone *k* of line *n* thus becomes:

$$b_k^n = \log_2 \left( 1 + \frac{1}{\Gamma} \frac{\left| h_k^{n,n} \right|^2 s_k^n}{\sum_{m \neq n} \left( 1 - c_k^{n,m} \right) \left| h_k^{n,m} \right|^2 s_k^m + \sigma_k^n} \right)$$

Thus, as a result of the crosstalk cancellation, the channel experiences less noise, and a higher data rate can be achieved for a given bit error rate, than would be the case without crosstalk cancellation.

Although the knowledge of the crosstalk transfer functions is not perfect but rather estimated in reality, crosstalk cancellation techniques based on such calculations have been applied in practice with success. Such crosstalk cancellation schemes are typically applied in access node equipment, which normally has access to the signals transmitted or received on the various interacting links, such as the lines that are present in a common bundle.

For cancellation of far-end crosstalk in the downstream channel, certain techniques rely on adding a component to the transmitted signal, which, when received, will substantially cancel out the received crosstalk contribution from one or more selected neighboring lines.

The relevant variables may be estimated on the basis of feedback from the equipment at the far end, as is known, in the case of digital subscriber line systems, from the G.vector draft standard.

For cancellation of far-end crosstalk in the upstream channel, certain techniques rely on subtracting a component from the received signal, which corresponds to the received crosstalk from one or more selected neighboring lines, estimated on the basis of the signals directly received on said selected lines.

Techniques such as the ones described above, require a significant amount of processing power. In reality, the available processing power is limited. Such a limitation may be expressed as follows:

$$\sum_{k,m,n} c_k^{m,n} \le C^{total}$$

As indicated above, it is desirable to allocate this limited amount of processing power as efficiently as possible, in particular in view of achieving a particular system-wide characteristic.

Embodiments of the present invention are directed towards the application of crosstalk cancellation while optimizing a characteristic related to a higher layer in the communication protocol stack, i.e. performing crosstalk cancellation with cross-layer optimization. In particular, these embodiments rely on the positive effect that the application of crosstalk cancellation has on the achievable data rate of a channel, to indirectly distribute additional data rate capacity to different lines, namely by distributing crosstalk cancellation resources. The change in data rate so achieved is used to beneficially affect the higher-lay metric of interest.

In an embodiment of the present invention, the method for allocating an amount of crosstalk cancellation resources among a plurality of network links, comprises determining the value of a predetermined high-layer metric for one or more of the plurality of network links; and determining a set of resource allocation parameters that optimizes a predetermined utility function, said utility function being dependent on said value of said high-layer metric; wherein said set of resource allocation parameters comprises, for each one of said plurality of network links, a vector indicating whether to cancel crosstalk received from individual other ones of said plurality of network links.

The set of resource allocation parameters may include a binary vector for every network link, indicating for every other network link whether its crosstalk should be cancelled or not. For a system comprising $N$ lines, the said vector for each tone and for each user has dimension $N$-1, and the utility function must thus be optimized over a parameter set of size $N(N$-1). Taking into account a discrete multi-tone system with $K$ tones per line, the number of parameters to be optimized is $KN(N$-1). The constraints imposed on the optimization problem introduce a coupling between the resources that may be allocated to the different disturbers, i.e., the various tones of different users.

The problem of optimizing the high-layer metric (utility function) in function of crosstalk resource allocation, under the constraint of respecting a certain resource budget, may be approached mathematically by introducing the constraint into the utility function with a Lagrange multiplier , and optimizing the resulting expression in function of the resource allocation parameters and . More specifically, the optimization of the latter expression may be performed using an adaptive-step sub-gradient algorithm.

Complexity and power penalties may be taken into account by including appropriate parameters in the definition of the utility functions, such as for example cancellation taps and power loading.

Embodiments of the present invention are directed towards the application of crosstalk cancellation while controlling higher-layer data transmission latency, by stabilizing the size of each respective instantaneous data queue length $Q^n(t)$ associated with a line $n$ at time slot $t$. To this end, these embodiments employ a utility function that represents a weighted sum of the data rates of the lines, whereby the respective queue sizes are used as the corresponding weighting coefficients.

By optimizing this utility function under the constraint of observing a certain crosstalk cancellation budget, which may for instance be self-imposed or due to the physical processing power limitations, the resource optimization process will allocate more resources (and thus provide higher data rates) to those lines for which the data queue is longer.

In a particular embodiment, one or more queues with specific Quality of Service requirements are taken into account for each user. In that case, queues with a higher Quality of Service requirement may receive a correspondingly higher weight in the utility function.

These embodiments are based *inter alia* on the insight that links fed by longer queues experience longer queuing delays, and that such queuing delays have a negative impact on the Quality of Service. One way to reduce the queuing delays is by increasing the rate at which data is extracted from the queue, i.e. the data rate of the corresponding link. This may be achieved by allocating crosstalk cancellation resources to the link in question.

Assuming that the arrival of data in the queues is a stochastic process $A^n(t)$, while the queues are emptied at a rate determined by the line's data rate $R^n(t)$, individual queues may temporarily grow significantly. The dynamic redistribution of crosstalk cancellation resources, and thus indirectly of an additional amount of data rate, to the lines that have the longest instantaneous queue size, causes a stabilization of the queue sizes.

An exemplary optimization algorithm, decoupled over users and tones, is as follows:

```
while  C ≠ C^total  do
    for  n = 1 to N  do
        for  k = 1 to K  do
```

$$c_k^{n,opt} = \arg\max{}_c \, Q^n(t)b_k^n - \lambda \sum_{m=1}^{N} c_k^{n,m}$$

```
        end for
    end for
    update
end while
```

$$Q^n(t+1) = \left[Q^n(t) - R^n(t)\right]^+ + A^n(t)$$

wherein the actual determination of the crosstalk canceller allocation values in the inner loop of the algorithm involves the calculation of all the targeted data rates $b_k^n$ in function of the said crosstalk canceller allocation values.

To perform the above scheme, the access node (AN) equipment needs to have access to the instantaneous queue sizes. With respect to the downstream connection, the queues in question are typically present in storage components in the same equipment. It will therefore be appreciated by the skilled person that this information may be provided to the element performing the optimization algorithm, using control signals of the known kind. With respect to the upstream connection, the access node equipment needs to receive accurate information about the queue size of each line from the respective customer premises equipment (CPE) units, for which appropriate control signals may be provided. The AN may be provided with the capability to request the CPE to adjust their bit rates in accordance with the optimizations taking place at the AN.

Embodiments of the present inventions are based on the insight that the above scheme, applied with respect to the upstream link, gives the CPE units an incentive to cheat. In particular, by reporting a higher queue load than the actual one, the CPE may attempt to influence the resource allocation process in its favor. The reported high load will, in principle, lead to the allocation of more crosstalk cancellation resources by the AN, and thus to a higher upstream data rate. This will further reduce the queuing latency experienced by this particular CPE, to the detriment of other subscribers, if there are insufficient resources at the AN to serve all subscribers.

It is therefore advantageous to determine the CPE's queuing state without relying solely on a report from the CPE. This may be achieved by analyzing the data received by the data link layer to determine the fraction of idle time of the upstream link. Idle time is time during which no data link datagrams are available for transmission, and the link is filled with a predetermined pattern to maintain normal operation of the physical layer and synchronization of the encapsulation/decapsulation layer (sometimes called the transmission convergence layer):

- In Asynchronous Transfer Mode (ATM), idle time is filled with idle cells, each having the normal cell length of 53 bytes.
- In Packet Transfer Mode (PTM), which relies on High-Level Data Link Control (HDLC) encapsulation, idle time is filled with any number of repeated 'flag' (0x7E) bytes.
- In Ethernet in the First Mile (EFM), which relies on 64/65-octet encapsulation, idle time is filled with 'Z' (0x00) bytes, while maintaining the 65-byte codeword boundaries.

A high fraction of idle time on a link is an indication that the link is being used below its channel capacity, and that its transmit queue is empty at least part of the time. Total absence of idle time on a link is an indication that the link is being used at its channel capacity, and that its transmit queue is either stable or growing. An appropriate signal should be provided from the transmission convergence layer to the element performing the crosstalk resource allocation, to allow the latter to take into account the idle time fraction of individual digital subscriber lines.

The resource allocation optimization of the present invention may be applied dynamically, by recalculating the optimal crosstalk cancellation resource allocation from time to time. In order to benefit from newly allocated crosstalk cancellation resources, the receiver of the link in question must be allowed to inform the transmitter of the new effective signal-to-noise ratio, and the transmitter must in turn be allowed to inform the receiver of the applied changes in modulation to benefit from the improved signal-to-noise ratio, e.g. an increase of the bit loading of a particular tone in a DMT system.

The frequency of recalculating the resource allocation should therefore take into account the time required for the associated information exchange.

Embodiments of the present invention are based on the insight that when applying the optimization of the present invention dynamically, certain allocations will hardly change between allocation calculations. More particularly, with reference to DMT-based systems, certain tones will consistently be allocated crosstalk cancellation resources, while others will consistently be denied crosstalk cancellation resources. Hereinafter, the former set is referred to as the "beneficial tones", and the latter as the "non-beneficial tones". This effect is typically due to the network topology, and the resulting particulars of the coupling functions, which imply that certain spectral regions of certain receiver/disturber combinations will be more severely affected by crosstalk than others, and thus benefit more readily from crosstalk cancellation. Concretely, high-frequency regions are more likely to receive crosstalk cancellation resources on shorter lines, while low-frequency regions are more likely to receive crosstalk cancellation resources on longer lines.

It is therefore advantageous to perform a preliminary identification of the beneficial tones and the non-beneficial tones, and to limit the optimization of the resource distribution to the remaining tones. In a particular embodiment of the present invention, this preliminary assessment is performed automatically by means of a user-wise frequency-selectivity training at the start-up of the system. In addition to reducing the search space in the optimization problem, static allocation has the advantage of being able to guarantee a minimum target rate or Quality of Service for certain applications or users.

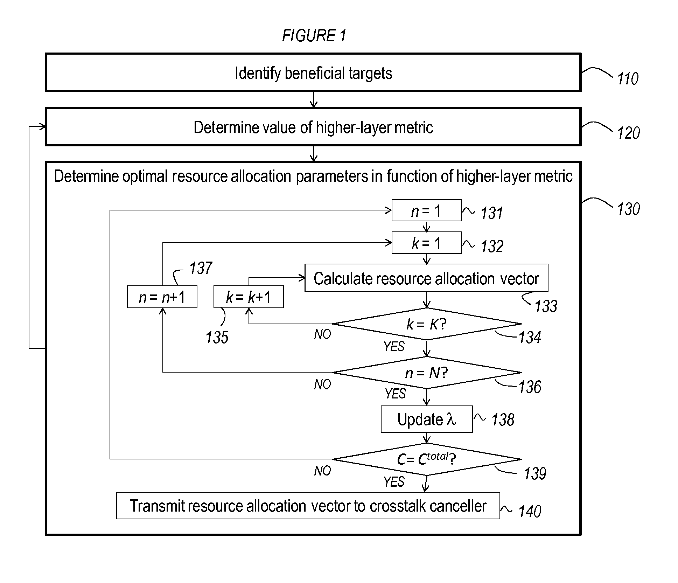

The above scheme is schematically illustrated in Figure 1. The identification of beneficial and non-beneficial tones, or targets, is an optional preliminary step **110,** which need not normally be repeated once the system is up and running. The runtime operation of the scheme iterates between the step of obtaining the relevant high-layer metric **120,** and using the obtained values to calculate the optimal resource allocation **130.**

The calculation step **130** is illustrated in an exemplary manner as a flow chart representing the algorithm introduced above, wherein *N* is the number of targeted subscriber lines, *K* is the number of targeted tones (for single-carrier or carrier-less modulation schemes, *K* may be set to 1), is the Lagrange multiplier used to solve the constrained optimization problem, *C* is the number of crosstalk cancellation resources consumed, and $C^{total}$ is the number of available crosstalk cancellation resources.

The algorithm as illustrated consists of three nested loops. The outer loop provides for the updating of , at step **138,** and continues until the budget constraint is met in an optimal way by achieving equality at step **139.** Within the -loop, an iteration over all targeted subscriber lines takes place, characterized by *n* values ranging from 1, at step **131,** to *N,* at step **136,** incrementing by 1 each time, at step **137.** Within the n-loop, an iteration over all targeted tones takes place, characterized by *k* values ranging from 1, at step **132,** to *K,* at step **134,** incrementing by 1 each time, at step **135.**

The skilled person will understand that standard techniques may be used to select an initial value for , and to update it at step **138.** The skilled person will further understand that the particular algorithm used to implement step **130** may vary, without departing from the inventive concept of the present invention.

Embodiments of the present invention are based on the insight that the available crosstalk cancellation resource budget need not always be fully deployed in order to reach the targeted high-layer goal. It is therefore advantageous to operate under a budget-adaptive mode, preferably a mode wherein the lowest necessary budget is determined and imposed as a constraint on the allocation optimization process.

For instance, when the targeted high-layer goal is stabilization of the transmission queues to control delay, the minimal necessary crosstalk canceller resource budget may be determined that reaches this goal, i.e. the poorest delay performance for the given workload that does not lead to instability. A trade-off is possible between on the one hand using the tightest possible resource budget, and accepting the poorest delay performance resulting from that choice, and on the other hand using the total physically available resource budget $C^{total}$ all the time. Representing this trade-off by parameter *V,* the optimization problem becomes finding $c^{opt}(t) = \arg\max_c \sum_{n=1}^{N} Q^n(t)R^n - VC(t)$, such that

$$\sum_{k=1}^{K}\sum_{m=1}^{N}\sum_{n=1}^{N} c_k^{n,m} \le C^{total} .$$

A further improvement of this approach consists of replacing the static cost index *V* by a dynamic cost index *V(t),* the instantaneous value of which is for instance a monotonically decreasing function of the queue lengths. The instantaneous system delay may be defined as $\Psi(t) = \sum_{n-1}^{N} Q^n(t)$, and *V(t)* may be updated in function of a target value of the instantaneous system delay:

$$V(t) = V(t-1) + \varepsilon \left( \Psi^{t\,\mathrm{arg}\,et} - \sum_{n=1}^{N} Q^n(t) \right).$$

In this way, the crosstalk canceller usage is regulated by the difference between the instantaneous queuing status and the target queue length. The optimization problem becomes finding

$$c^{opt}(t) = \arg\max_c \sum_{n=1}^{N} Q^n(t) R^n - V(t)C(t) \text{, such that } \sum_{k=1}^{K}\sum_{m=1}^{N}\sum_{n=1}^{N} c_k^{n,m} \leq C^{total}.$$

In general, the optimization algorithms mentioned above may be broadened to a variety of resource constraints. For example, when crosstalk cancellation and power loading are applied to the system, the resources such as the shape of the different transmit power spectrum distributions (in the case of DMT modulation, the transmit power values per tone), the application of filter taps, and similar system resources, may also be allocated for the specific QoS requirement in the joint optimization problem.

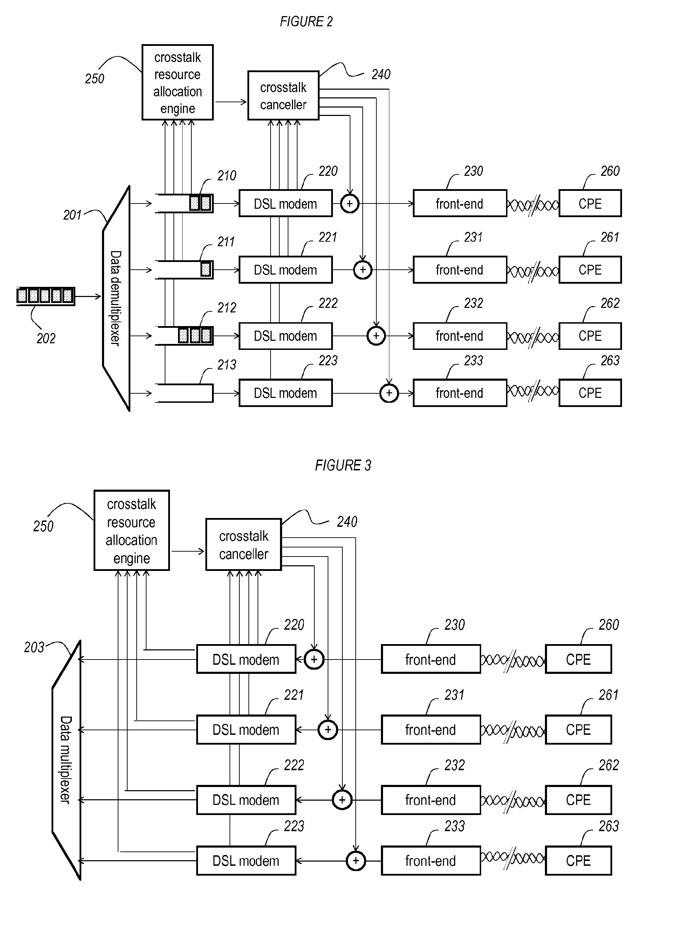

Figure 2 depicts an exemplary system according to the present invention. Without loss of generality, the example is directed to network access links of the digital subscriber line (DSL) type.

The depicted system comprises a plurality of DSL modems **220-223.** For reasons of clarity, only four DSL modems are shown in the Figure; however, the invention is not limited to any particular number of DSL modems. The same remark is valid for the other elements, associated with the DSL modems **220-223,** for which the same particular number of instances is illustrated.

In Figure 2, the system is illustrated as it would operate to perform crosstalk cancellation in the downstream direction, i.e. from the access node to the customer premises equipment **260-263.**

The DSL modems **220-223** may operate according to any of the known xDSL flavors. It is particularly advantageous to use DSL modems that operate according to the Discrete-Multitone modulation scheme, such as for instance ADSL, VDSL, VDSL2, or 10PASS-TS modems.

Each of the DSL modems **220-223** is arranged to transmit a signal onto a transmission line such as a "twisted-pair" telephone line, which is typically provided as a pair of insulated copper wires. To this end, the signal generated by the DSL modems **220-223** is duly amplified and filtered by their respective front-ends **230-233,** the details of which are not material to this invention.

Without loss of generality, the illustrated embodiment pertains to the optimization of a metric relating to queue lengths. The DSL modems **220-223** receive data for transmission from their respective buffers **210-213.** The buffers are illustrated as simple First-In-First-Out (FIFO) buffers, but more complex buffers may be employed; in particular, the buffers may support multiple queues with the same or different priorities (i.e. Quality of Service) per modem and/or they may apply ageing. The buffers are filled with data received from a data demultiplexer **201,** for which a common input buffer **202** is also illustrated. Without loss of generality, these buffers may be considered to receive data at the granularity of data link layer datagrams or frames, network layer datagrams or packets, or higher-layer segments.

The buffers **210-213** are adapted to allow information about the length of the queues to be conveyed from the buffers to the crosstalk cancellation resource allocation engine (CRAE) **250.** The CRAE **250** uses this information to calculate the weighted sum of data rates (or any other utility that depends on the resources that are being optimized) to which an optimization algorithm is applied as described in detail above. It is assumed but not shown that the CRAE **250** has access to the necessary information about the crosstalk channel matrix to perform its tasks. The CRAE **250** may be implemented in any of the known components used for intensive numerical calculations, including adequately programmed general-purpose processors or DSPs, FPGAs, or dedicated hardware.

The result of this optimization algorithm is a set of crosstalk resource allocation values, representing which DSL lines, or in the case of DMT modulation, which tones of which DSL lines, shall receive crosstalk cancellation resources. These values are conveyed to the crosstalk canceller **240,** which applies its resources accordingly. In some particular embodiments, the optimization algorithm may, depending on the objective or utility to be optimized, simultaneously assign values to other variables under the given constraints, such as the shape of the different transmit power spectrum distributions (in the case of DMT modulation, the transmit power values per tone), the application of filter taps, and similar system resources.

The crosstalk canceller **240** operates on the basis of knowledge of the characteristics of the transmission lines, including their crosstalk transfer functions, and of the signals transmitted by the DSL modems **220-223;** the latter information is schematically represented by arrows leading from the DSL modems **220-223** to the crosstalk canceller **240.** From this information, the crosstalk canceller **240** calculates for each of the DSL modems for which crosstalk cancellation resources have been allocated, or in the case of DMT modulation, individual tones of DSL modems for which crosstalk cancellation resources have been allocated, the signal that must be added to the original signal generated by the DSL modem in order to cancel out the effect of the targeted disturbers. Without loss of generality, the injection of the crosstalk cancelling signal is represented in a simplified manner as an addition operating between the DSL modems **220-223** and their respective line drivers **230-233.** It will be appreciated by those skilled in the art that the addition of the crosstalk cancellation terms may be obtained in different ways, including by the application of a precoding matrix, for instance after the mapping and scaling steps, and before the inverse fast-fourier-transform. The crosstalk canceller **240** may be implemented in any of the known components used for intensive numerical calculations, including adequately programmed general-purpose processors or DSPs, FPGAs, or dedicated hardware. The skilled person will understand that the foregoing general scheme may be used with any type of linear precoder.

The allocation of crosstalk cancellation resources by the CRAE **250** may be repeated periodically, to track the changed state of the queues in buffers **210-213.** The skilled person shall understand that the beneficial effect of the application of crosstalk cancellation will manifest itself at the level of the data rate when an improved signal-to-noise ratio is detected by the affected customer premises equipment **260-263** and communicated to the corresponding DSL modems at the access node **220-223** in the usual way; this communication may prompt the affected DSL modems **220-223** to increase their data rate accordingly.

In Figure 3, the system is illustrated as it would operate to perform crosstalk cancellation in the upstream direction, i.e. from the customer premises equipment **260-263** to the access node. Elements that are shared between Figure 2 and Figure 3 have been designated with the same reference numerals. It will be appreciated that statements of a general nature made above in reference to Figure 2, apply corresponding in reference to Figure 3.

Each of the DSL modems **220-223** is arranged to receive a signal from the attached transmission line. To this end, the signal received on the line is duly amplified and filtered by their respective front-ends **230-233,** the details of which are not material to this invention. The signal is then conveyed to the DSL modems **220-223.**

The different pieces of customer premises equipment **260-263** comprise buffers (not shown) for queuing data for transmission. These buffers are adapted to allow information about the length of the queues to be conveyed from the buffers to the CRAE **250** via an in-band signaling channel embedded in the DSL communication channel. The retrieval of this information at the access node side by the CRAE **250** is schematically illustrated as a set of arrows from the DSL modems **220-223,** where the said in-band channel is terminated, to the CRAE **250.**

To reduce the overhead associated with reporting the queue lengths, these queue lengths could be reported periodically. Additionally or alternatively, the access node may build up knowledge about queue sizes without feedback from the CPE, based on the status of the queue sizes at the local packet processors combined with knowledge of the actually used data rate of the lines and how this actual rate compares with the attainable rate (for instance, a relatively short local queue for a link with a high relative actual data rate may be used as an indication that the queue at the CPE side is long, and that more rate-increasing resources such as crosstalk cancellation resources must be allocated to the link in question; conversely, a relatively short local queue for a link with a low relative actual data rate may be used as an indication that the queue at the CPE side is short, and that some of the resources of the link in question may be better used elsewhere). This approach may further be combined with the idle time analysis described above.

As before, the CRAE **250** uses the queue length information to calculate the weighted sum of data rates (or any other utility that depends on the resources that are being optimized) to which an optimization algorithm is applied as described in detail above. The result of this optimization algorithm is a set of crosstalk resource allocation values, representing which DSL lines, or in the case of DMT modulation, which tones of which DSL lines, shall receive crosstalk cancellation resources. These values are conveyed to the crosstalk canceller **240,** which applies its resources accordingly.

The crosstalk canceller **240** calculates for each of the DSL modems for which crosstalk cancellation resources have been allocated, or in the case of DMT modulation, individual tones of DSL modems for which crosstalk cancellation resources have been allocated, the signal that must be added to the signals received from the respective lines in order to cancel out the effect of the targeted disturbers. The injection of the crosstalk cancelling signal is represented in a simplified manner as an addition operating between the front-ends **230-233** and the corresponding DSL modems **220-223.** It will be appreciated by those skilled in the art that the addition of the crosstalk cancellation terms may be obtained in different ways, including by the application of a postcoding matrix, e.g. after the fast-fourier-transform.

The allocation of crosstalk cancellation resources by the CRAE **250** may be repeated periodically, to track the changed state of the queues in the customer premises equipment **260-263.** The skilled person shall understand that the beneficial effect of the application of crosstalk cancellation will manifest itself at the level of the data rate when an improved signal-to-noise ratio is detected by the affected ones of the DSL modems **220-223** and communicated to the corresponding customer premises equipment **260-263** in the usual way; this communication may prompt the affected pieces of customer premises equipment **260-263** to increase their transmission rate accordingly.

For clarification purposes, it is further shown in Figure 3 that the data received by DSL modems **220-223** is conveyed to a data multiplexer **203** for further forwarding to the applicable destinations.

The functions of the various elements shown in the Figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for allocating an amount of crosstalk cancellation resources among a plurality of network links, said method comprising determining a set of resource allocation parameters in function of a predetermined high-layer metric, wherein said set of resource allocation parameters comprises, for each one of said plurality of network links, an indication whether to cancel crosstalk received from individual other ones of said plurality of network links.

2. The method of claim 1, comprising:

   determining respective values of a predetermined higher-layer metric for one or more selected links of said plurality of network links; and determining the set of resource allocation parameters so as to optimize, under the constraint of respecting said amount, a predetermined function of said values of said predetermined high-layer metric for said selected links.

3. The method according to claim 2, wherein said predetermined metric is a data queue length.

4. The method according to claim 3, wherein said function comprises a weighted sum of the respective data rates of said selected links, each of said data rates being multiplied by the corresponding data queue length.

5. The method according to any of the preceding claims, wherein said plurality of network links operate according to discrete multi-tone modulation, and wherein said determining is performed on a per-tone basis.

6. The method according to claim 5, further comprising the step of identifying tones for which said resource allocation parameters are substantially constant under varying values of said predetermined high-layer metric, wherein said determining said set of resource allocation parameters is limited to tones that are not so identified.

7. The method according to any of the preceding claims, further comprising reducing said amount to a level below a physically available amount while preserving a predetermined performance level, and determining said set of resource allocation parameters under the constraint of respecting said reduced amount.

8. The method according to any of the preceding claims, wherein said crosstalk cancellation resources comprise resources to compute a compensation term to be added to a downstream signal prior to transmission.

9. The method according to any of claims 1-7, wherein said crosstalk cancellation resources comprise resources to compute a compensation term to be added to a received upstream signal.

10. The method according to any of the preceding claims, wherein said network links are digital subscriber lines.

11. A system for allocating an amount of crosstalk cancellation resources among a plurality of network links, said system comprising a crosstalk cancellation resource allocation engine operatively coupled to a crosstalk canceller, wherein said crosstalk cancellation resource allocation engine is adapted to determine a set of resource allocation parameters in function of a predetermined high-layer metric, and wherein said crosstalk canceller is adapted to calculate a signal component to substantially cancel crosstalk according to said crosstalk cancellation resource allocation values.

**12.** The system of claim 11, wherein said crosstalk cancellation resource allocation engine is adapted to obtain respective values of a predetermined metric for selected links of said plurality of network links and to determine a set of resource allocation parameters that optimizes a predetermined function of said values of said high-layer metric for said selected links.

**13.** The system according to claim 1211, wherein said predetermined metric is a data queue length.

**14.** The system according to claim 13, wherein said function comprises a weighted sum of the respective data rates of said selected links, each of said data rates being multiplied by the corresponding data queue length.

**15.** The system according to any of claims 11-14, wherein said plurality of network links operate according to discrete multi-tone modulation, and wherein said optimizing is performed on a per-tone basis.

**16.** The system according to any of claims 11-15, wherein said network links are digital subscriber lines.

*FIGURE 1*

| Identify beneficial targets | 110 |

↓

| Determine value of higher-layer metric | 120 |

↓

Determine optimal resource allocation parameters in function of higher-layer metric — 130

$n = 1$ — 131

↓

$k = 1$ — 132

↓

137

$n = n+1$   $k = k+1$ → Calculate resource allocation vector

135

133

$k = K?$ — 134

NO

YES

$n = N?$ — 136

NO

YES

Update λ — 138

↓

$C = C^{total}?$ — 139

NO

YES

| Transmit resource allocation vector to crosstalk canceller | 140 |

FIGURE 2

FIGURE 3

Europäisches
Patentamt

European
Patent Office

Office européen
des brevets

## EUROPEAN SEARCH REPORT

Application Number

EP 10 30 5246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 414 164 A1 (CIT ALCATEL [FR]) 28 April 2004 (2004-04-28) * paragraphs [0011], [0043], [0044], [0052] - [0058] * | 1-16 | INV. H04B3/32 H04B3/46 |
| E | WO 2010/060446 A1 (ERICSSON TELEFON AB L M [SE]; LINDQVIST FREDRIK [SE]; DORTSCHY BORIS []) 3 June 2010 (2010-06-03) * abstract * | 1,11 | |
| A | WO 2009/038669 A1 (LUCENT TECHNOLOGIES INC [US]; ASHIKHMIN ALEXEI [US]; DE LIND VAN WIJNG) 26 March 2009 (2009-03-26) * abstract * | 1-16 | |

TECHNICAL FIELDS SEARCHED (IPC)

H04B

The present search report has been drawn up for all claims

| Place of search | Date of completion of the search | Examiner |
|---|---|---|
| The Hague | 1 November 2010 | De Iulis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 30 5246

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2010

| Patent document cited in search report | | Publication date | Patent family member(s) | | Publication date |
|---|---|---|---|---|---|
| EP 1414164 | A1 | 28-04-2004 | CN<br>US | 1499734 A<br>2004086064 A1 | 26-05-2004<br>06-05-2004 |
| WO 2010060446 | A1 | 03-06-2010 | NONE | | |
| WO 2009038669 | A1 | 26-03-2009 | US | 2009060013 A1 | 05-03-2009 |

EPO FORM P0459